# EUROPÄISCHE PATENTSCHRIFT

(11) **EP 0 443 054 B1**
(45) Veröffentlichungstag und Bekanntmachung des Hinweises auf die Patenterteilung: **30.11.1994**
(21) Anmeldenummer: 90103263.1
(22) Anmeldetag: 20.02.1990
(51) Int. Cl.: A47J 31/40

(54) **Kaffeemaschine**
Coffee-maker
Cafetière

(43) Veröffentlichungstag der Anmeldung: 28.08.1991
(73) Patentinhaber: WMF WÜRTTEMBERGISCHE METALLWARENFABRIK AG, 73304 Geislingen (DE)
(72) Erfinder: Göckelmann, Karl, D-7921 Gerstetten (DE)
(74) Vertreter: Grünecker, Kinkeldey, Stockmair & Schwanhäusser Anwaltssozietät

(56) Entgegenhaltungen:
- DE-A- 2 012 503
- DE-A- 2 912 841
- DE-A- 3 316 159
- DE-C- 3 843 568
- FR-A- 2 286 628
- GB-A- 2 162 051

## Beschreibung

Die Erfindung bezieht sich auf eine Kaffeemaschine der im Oberbegriff von Anspruch 1 erläuterten Art.

Eine derartige Kaffeemaschine ist aus der DE-A-38 43 568 bekannt. Die bekannte Kaffeemaschine weist ein Schließglied auf, das nur zwischen zwei Stellungen, einer Parkstellung und einer Schließstellung, verfahrbar ist. In der Parkstellung befindet sich das Schließglied vollständig außerhalb und in der Schließstellung vollständig oberhalb der Öffnung der Brühkammer. Vor Beginn des Brühvorganges wird das Schließglied in die Parkstellung verfahren und Kaffeemehl eindosiert. Danach fährt das Schließglied in die Schließstellung, damit ein Brühvorgang gestartet werden kann. Nach Beendigung des Brühvorganges fährt das Schließglied wiederum in seine Parkstellung, der Kolben im Inneren der Brühkammer wird angehoben und schiebt den ausgelaugten Kaffessatz nach oben aus der Öffnung. Dann wird das Schließglied offensichtlich wieder in seine Schließstellung verfahren, wobei durch ein am Schließglied angeordnetes Abstreifblech der Kaffeesatz ausgeworfen wird. Dieses Abstreifblech befindet sich in der Parkstellung des Schließgliedes direkt benachbart der Öffnung der Brühkammer und an der vorlaufenden Seite des Schließgliedes bei jeder Bewegung des Schließgliedes aus der Parkstellung in die Schließstellung. Die bekannte Kaffeemaschine ist zwar robust aufgebaut, durch die Anordnung des Abstreifers und die begrenzte Bewegungsmöglichkeit des Schließgliedes ist jedoch nicht auszuschließen, daß ausgelaugter Kaffeesatz, der nach dem Auswerfen am Abstreifer hängengeblieben ist, antrocknet, in die Brühkammer zurückfällt und dann die Qualität der nachfolgend gebrühten Kaffeecharge beeinträchtigt.

Eine aus der DE-OS 29 12 841 bekannte Kaffeemaschine weist eine aufrechtstenende, prismatische Brühkammer auf, an deren oberer Stirnseite eine Öffnung zum Einfüllen des Kaffeemehls und zum Ausstoßen des ausgelaugten Kaffeesatzes vorgesehen ist. In der Brühkammer bewegt sich ein Kolben auf und ab, der in einer seiner Stellungen so weit nach oben verschoben ist, daß seine Kolbenfläche mit dem oberen Rand der Brühkammer fluchtet. Zum Verschließen der Öffnung der Brühkammer ist ein als weiterer Kolben ausgebildetes Schließglied vorgesehen, das aus seiner die Öffnung verschließenden Stellung zunächst senkrecht nach oben und danach so weit waagerecht neben die Brühkammer bewegbar ist, daß die Öffnung nach oben hin freiliegt. Zum Eindosieren von Kaffeemehl ist ein Beschickungsbehälter vorgesehen, der sich in waagerechter Richtung so weit über die Brühkammer bewegen kann, daß Kaffeemehl durch eine Öffnung in die Brühkammer fällt. Nach Beendigung des Dosiervorganges wird der Beschickungsbehälter wieder neben die Brühkammer bewegt, so daß das Schließglied die Brühkammer verschließen kann. An der bei der Bewegung des Beschickungsbehälters in seine Dosierstellung vorlaufenden Kante des Beschickungsbehälters ist ein Abstreifer zum Abstreifen und Auswerfen des ausgelaugten Kaffeesatzes angeordnet. Nach Beendigung eines vorangegangenen Brühvorganges bzw. vor Beginn eines neuen Brühvorganges wird somit zunächst das Schließglied nach oben und danach zur Seite bewegt, so daß die Öffnung der Brühkammer freiliegt. Dann bewegt sich der Kolben in der Brühkammer so weit nach oben, bis seine Kolbenfläche in der Ebene der Öffnung liegt, der ausgelaugte Kaffeesatz somit aus der Öffnung vorragt. Danach bewegt sich der Beschickungsbehälter mit vorlaufendem Abstreifer über die öffnung, wobei der Abstreifer den ausgelaugten Kaffeesatz zur gegenüberliegenden Seite der Brühkammer abschiebt. Der Kolben in der Brühkammer bewegt sich wieder nach unten, so daß nunmehr das Kaffeemehl für den nächsten Brühvorgang eindosiert werden kann. Nach Beendigung des Dosiervorganges bewegt sich der Beschickungsbehälter wieder in seine Ausgangsposition; dabei wird jedoch auch der Abstreifer wieder über die Öffnung der Brühkammer zurückgeführt. Bei dieser Rückführung soll der Abstreifer der bekannten Kaffeemaschine nochmals den oberen Teil der Brühkammer reinigen. Da diese Bewegung jedoch entgegengesetzt zur ersten Reinigungsbewegung erfolgt, so wird der sich eventuell noch am Rande der öffnung befindende, ausgelaugte Kaffeesatz nach innen geschoben und fällt auf das frische Kaffeemehl in der Brühkammer. Darüber hinaus bewegt sich der Abstreifer im weiteren Verlauf seiner Bewegung über die öffnung, so daß an ihm haftengebliebener Kaffeesatz ebenfalls in die mit frischem Kaffeemehl gefüllte Brühkammer fallen kann. Kaffeesatzreste in der Brühkammer können jedoch die Qualität des nachfolgend gebrühten Kaffees negativ beeinflussen. Außerdem ist die bekannte Kaffeemaschine durch die Vielzahl ihrer bewegten Teile relativ kompliziert in der Konstruktion und demzufolge auch mit mehr Fehlerquellen behaftet. So müssen beispielsweise die linearen Bewegungen des Beschickungsbehälters exakt auf die L-förmigen Bewegungen (mit senkrechten und waagerechten Komponenten) des Schließgliedes abgestimmt werden.

Der Erfindung liegt somit die Aufgabe zugrunde, eine Kaffeemaschine mit vereinfachter, robuster Konstruktion bereitzustellen, die trotzdem in der Lage ist, alle gewünschten Funktionen, einschließlich des Abstreifens des Kaffeemehls, ohne Qualitätseinbuße zu erfüllen.

Die Aufgabe wird durch die in Anspruch 1 angegebenen Merkmale gelöst.

Bei der erfindungsgemäßen Kaffeemaschine ist zum Öffnen und Schließen der Brühkammer, zum Abstreifen des Kaffeesatzes sowie zum Präparieren der Brühkammer für das Einfüllen von Kaffeemehl nur eine einzige Bewegungsart nur eines einzigen Teiles notwendig, wobei das Schließglied eine dritte, der ersten Stellung im wesentlichen gegen über liegende Stellung relativ zur Brühkammer einnehmen kann, in der sich der Abstreifer außerhalb der Öffnung befindet. Durch eine zweckmäßige Steuerbewegung wird dabei sichergestellt, daß sich der Abstreifer nach einem Abstreifvorgang erst dann wieder über die Öffnung der Brühkammer bewegt, wenn der nachfolgende Brühvorgang beendet ist bzw. ein Abstreifvorgang unmittelbar bevorsteht, so daß sich während der Rückbewegung des Abstreifers nur auszustoßender Kaffeesatz in der Brühkammer befindet. Durch diese Maßnahme erübrigt sich eine Reinigungseinrichtung für den Abstreifer.

In der Grundstellung gemäß Anspruch 2 können abtrocknende Reste von Kaffeesatz in den dafür vorgesehenen Aufnahme behälter fallen.

Weiterhin vereinfacht wird die Konstruktion, wenn gemäß Anspruch 3 das Schließglied bewegt wird und seine Bewegung entlang einer Geraden erfolgt, bzw. durch die Befestigung des Abstreifers direkt am Schließglied nach Anspruch 4.

Durch die Ausgestaltung nach Anspruch 5 wird einzudosierendes Kaffeemehl aus dem Kaffeemehlbehälter sicher auch über den durch die Höhe des Schließgliedes bedingten Abstand zur Öffnung der Brühkammer geleitet.

Durch die Ausgestaltung nach Anspruch 6 wird erreicht, daß der ausgelaugte Kaffeesatz möglichst in Form eines unzerbröckelten Kuchens ausgestoßen wird, wodurch die Gefahr weiter vermindert wird, daß Kaffeesatz an der Brühkammer oder am Brühkammer-Kolben hängenbleibt.

Von besonderem Vorteil ist die gemäß Anspruch 7 um den Kolbenumfang angeordnete Dichtung. Durch diese Dichtung wird verhindert, daß Kaffeesatzpartikel in den Grenzbereich zwischen Kolben und Umfangswandung der Brühkammer eingedrückt werden und dadurch bei der Rückbewegung des Kolbens in der Brühkammer verbleiben und sich mit dem frischen Kaffeemehl mischen.

Eine besonders wirksame Anordnung und Ausgestaltung dieser Dichtung beschreibt Anspruch 8.

In den Ansprüchen 9 bis 12 wird ein besonders bevorzugtes Getriebe beschrieben, das mit einem einzigen Antriebsmotor auskommt, der sowohl den Antrieb des Kolbens als auch des Schließgliedes übernimmt, und das einfach in der Konstruktion sowie sicher in seiner Funktion ist.

Ein Ausführungsbeispiel der Erfindung wird nachfolgend anhand der Zeichnungen näher erläutert. Es zeigen:
Figur 1 eine schematische Darstellung der wesentlichsten Merkmale einer erfindungsgemäß ausgerüsteten Kaffeemaschine in Seitenansicht,
Figur 2 eine vergrößerte, detailliertere Darstellung der Brüheinrichtung nach Figur 1 im Längsschnitt,
Figur 3 eine vergrößerte, detailliertere Darstellung der Brüheinrichtung in Draufsicht,
Figur 4 eine herausvergrößerte Einzeldarstellung der Abdichtung zwischen Kolben und Umfangswandung der Brühkammer,
Figur 5 eine geschnittene Vorderansicht der Brüheinrichtung mit einer ersten Stellung von Schließglied und Kolben,
Figur 6 die der Stellung von Schließglied und Kolben aus Figur 5 entsprechende Getriebestellung,
Figur 7 eine weitere Stellung von Schließglied und Kolben,
Figur 8 die der Stellung von Schließglied und Kolben gemäß Figur 7 entsprechende Getriebestellung,
Figur 9 eine weitere Stellung von Schließglied und Kolben,
Figur 10 die der Stellung von Schließglied und Kolben gemäß Figur 9 entsprechende Getriebestellung und
Figur 11 eine weitere Stellung von Schließglied und Kolben.

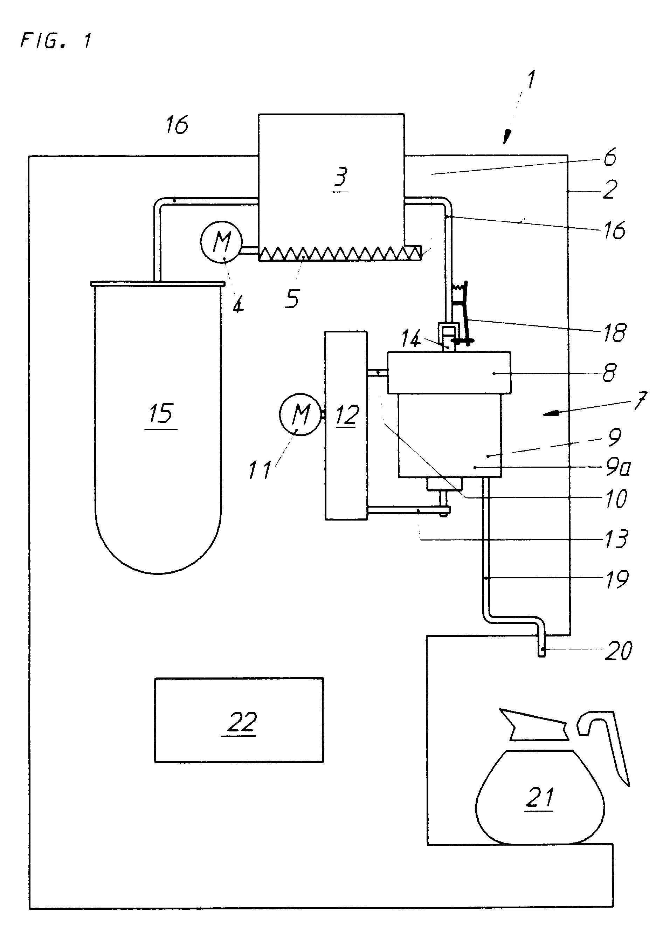

Aus Figur 1 ist eine Seitenansicht der wesentlichsten Merkmale einer Kaffemaschine 1 in schematischer Darstellung ersichtlich. Die Kaffeemaschine 1 weist ein Gehäuse 2 auf, dessen obere Deckwand durch einen Vorratsbehälter 3 für Kaffeemehl durchragt wird. Im unteren Bereich des Vorratsbehälters 3 ist eine der üblichen durch einen Motor 4 angetriebenen Dosierschnecken 5 vorgesehen, die das Kaffeemehl aus dem Vorratsbehälter 3 über eine Dosieröffnung 6 nach außen befördert. Die Dosieröffnung 6 ist senkrecht oberhalb einer Brüheinrichtung 7 angeordnet. Die Brüheinrichtung 7 enthält einen als Schließglied 8 für eine mit einer Umfangswandung 9a seitlich begrenzte Brühkammer 9 ausgebildeten Schlitten, der in noch zu beschreibender Weise senkrecht zur Zeichnungsebene bewegt werden kann. Die Brüheinrichtung 7 ist über einen Mitnehmerstift 10 mit einem durch einen Motor 11 betätigten, in einem Getriebekasten 12 untergebrachten Getriebe verbunden. Am Getriebekasten 12 ist weiterhin ein Träger 13 dargestellt, der weiter unten erläutert wird.

An der Oberseite des Schlittens 8 ist eine Tülle 14 angeordnet, in die eine von einem Heißwasserbereiter bzw. Heißwasserbehälter 15 kommende als flexibler Schlauch ausgebildete Heißwasserleitung 16 einmündet. Der Schlauch 16 ist in der Tülle 14 durch einen handelsüblichen Schnellverbinder 18 lösbar befestigt.

An der Unterseite der Brühkammer 9 tritt eine Kaffeeleitung 19 aus, die in einen außerhalb des Gehäuses 2 angeordneten Auslauf 20 mündet, unter den ein Auffanggefäß für Kaffeegetränk, dargestellt ist eine Karaffe 21, untergestellt werden kann. Die Kaffeeleitung 19 kann jedoch auch mit einem der bekannten Vorratsbehälter verbunden sein.

Der Arbeitsablauf der Kaffeemaschine wird durch eine im Gehäuse 2 untergebrachte Steuereinrichtung 22 gesteuert, wie sie für automatisch bzw. halbautomatisch arbeitende Kaffeemaschinen üblich ist.

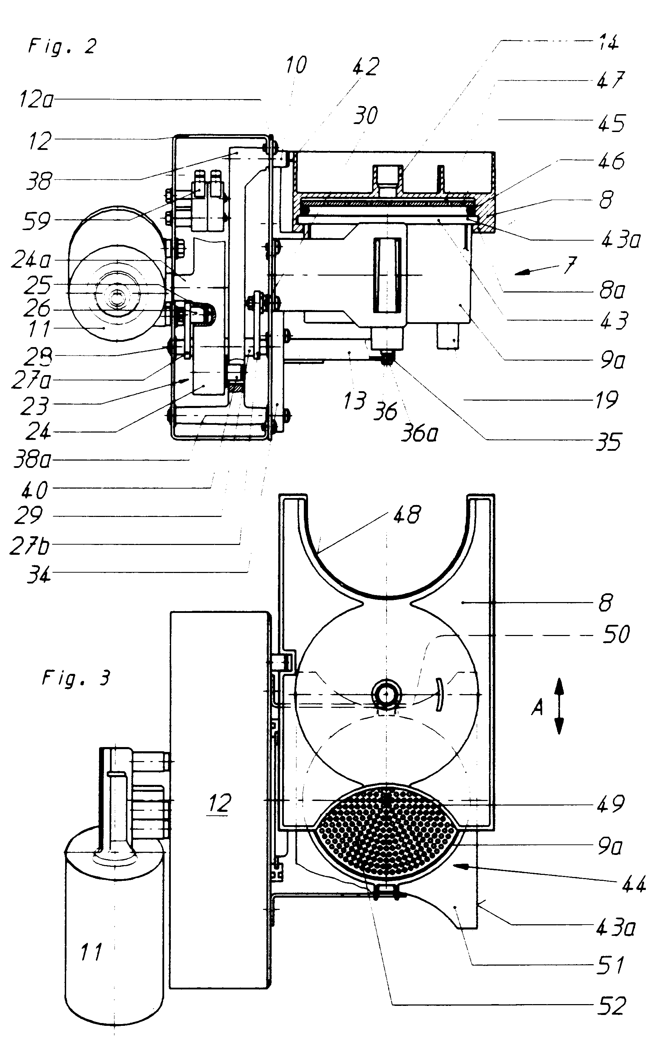

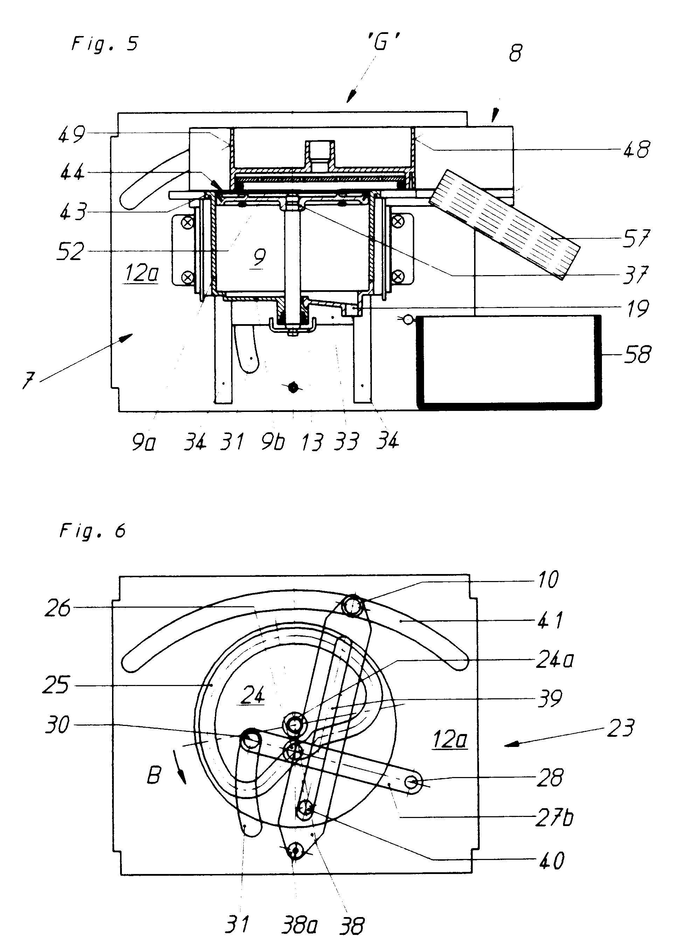

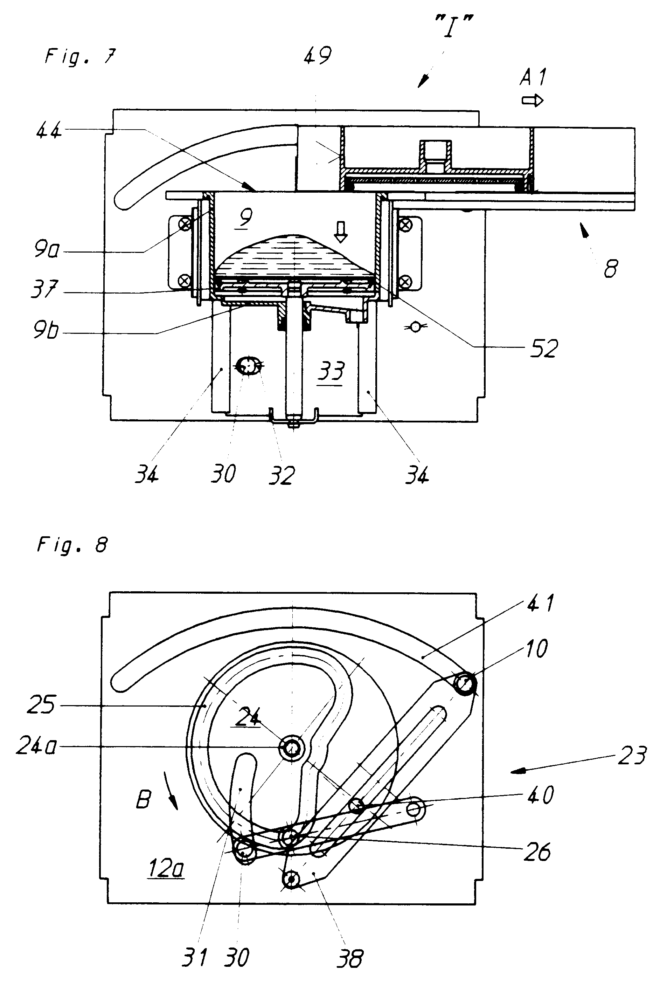

Anhand der Figuren 2 bis 7 wird nachfolgend die Brüheinrichtung 7 mit ihrem Getriebe 23 näher dargestellt. Das Getriebe 23 enthält eine vom Motor 11 um eine Drehachse 24a rotierend angetriebene Scheibe 24. In der dem Motor zugewandten Seite der Scheibe 24 ist eine in geschlossener Schleife asymmetrisch um die Drehachse 24a umlaufende Nut 25 eingearbeitet, in die ein Mitnehmerstift 26 eingreift. Der Mitnehmerstift 26 ist mit einer ersten Halbschwinge 27a verbunden, die um eine am Getriebekasten 12 angeordnete Drehachse 28 drehbar ist. Die Drehbewegung der ersten Halbschwinge wird über eine Hülse 29 auf eine zweite Halbschwinge 27b übertragen, die auf der der Nut 25 gegenüberliegenden Seite der Scheibe 24 angeordnet ist. Die zweite Halbschwinge 27b trägt an ihrem der Hülse 29 abgewandten Ende einen Mitnehmerstift 30, der eine der Brüheinrichtung 7 zugewandte Halteplatte 12a des Getriebekastens 12 durchragt und dort in einem Langloch 31 (Figur 6) geführt ist. Der Mitnehmerstift 30 durchragt weiterhin eine Öffnung 32 in einer Führungsplatte 33 (Figur 7), die in zwei ihre seitlichen Ränder übergreifenden, an der Halteplatte 12a angeordneten Führungen 34 in senkrechter Richtung verschiebbar ist. An der Führungsplatte 33 ist der Träger 13 befestigt, der an seinem freien, von der Führungsplatte 33 wegweisenden Ende einen nach vorn offenen Schlitz 35 aufweist, der in eine korrespondierende Ausnehmung 36a einer Kolbenstange 36 eingepaßt ist, so daß die Kolbenstange 36 bei der Bewegung der Führungsplatte 33 mitgenommen wird. Mit der Kolbenstange 36 ist ein Kolben 37 fest verbunden, der innerhalb der Umfangswandung 9a zum Vergrößern oder Verkleinern des Volumens der Brühkammer 9 bewegbar ist. Das Getriebe 23 enthält eine weitere Schwinge 38, die im Getriebekasten 12 um eine Drehachse 38a verschwenkbar ist. Die Schwinge 38 weist ein sich entlang ihrer Längsachse erstreckendes Langloch 39 auf, in den ein Mitnehmerstift 40 gleiten kann. Der Mitnehmerstift 40 ist außerhalb der Drehachse 24a an der Scheibe 24 befestigt. An dem ihrer Drehachse 38a abgewandten Ende der Schwinge 38 ist der mit dem Schlitten 8 verbundene Mitnehmerstift 10 befestigt. Der Mitnehmerstift 10 durchragt ein sich um die Drehachse 38a erstreckendes Langloch 41 in der Halteplatte 12a und greift in eine senkrechte Nut 42 am Schlitten 8 ein.

Der Schlitten 8 übergreift mit parallel zur Halteplatte 12a angeordneten, seitlichen Führungen 8a seitliche Ränder 43a einer Gleitplatte 43. Die Gleitplatte 43 ist unter Freilassung einer die obere Stirnfläche der Brühkammer 9 überdeckenden, kreisförmigen Öffnung 44 an der Umfangswandung 9a befestigt. Die Öffnung 44 liegt somit in der Ebene der Gleitplatte 43, so daß sich der Schlitten 8 in Richtung des Doppelpfeiles A entlang einer Geraden in einer parallel zur Öffnung 44 verlaufenden Ebene bewegen kann.

Im mittleren Bereich des im wesentlichen quaderförmigen Schlittens 8 ist an der der Gleitplatte 43 zugewandten Seite ein Verteilsieb 45 für Heißwasser angeordnet, dessen Umfangsform im wesentlichen der Umfangsform der oberen Öffnung 44 entspricht. Der Umfang des Verteilsiebes 45 ist über eine Dichtung 46 gegen die Gleitplatte 43 abgedichtet. An der der Gleitplatte 43 abgewandten Seite des Verteilsiebes 45 ist im Schlitten 8 eine Verteilkammer 47 vorgesehen, die sich über die gesamte Fläche des Verteilsiebes 45 erstreckt und mit dem Inneren der Tülle 14 in Verbindung steht, so daß Heißwasser aus dem Heißwasserbehälter 15 über die Heißwasserleitung 16 in die Verteilkammer 47 gelangen kann.

An seinen sich in Richtung des Doppelpfeiles A gegenüberliegenden Enden ist der Schlitten 8 mit einer ersten und zweiten, jeweils korrespondiernd zur Öffnung 44 gebogenen Begrenzungswand 48, 49 versehen. Die Begrenzungswände 48, 49 erstrecken sich im wesentlichen senkrecht zur Ebene, in der sich der Schlitten 8 bewegt. Die erste Begrenzungswand 48 bildet dabei im wesentlichen einen Halbkreis, während sich die zweite Begrenzungswand 49 etwa nur um ein Drittel des Umfanges der Öffnung 44 erstreckt. Die erste Begrenzungswand 48 ist als Abstreifer für ausgelaugten Kaffeesatz ausgebildet. Die zweite Begrenzungswand 49 dient als Leiteinrichtung für frisch einzudosierendes Kaffeemehl. Zweckmäßigerweise weist die Gleitplatte 43 sich in Richtung des Doppelpfeiles A gegenüberliegende Ausnehmungen 50, 51 in Form von Kreisabschnitten auf, deren Krümmung in etwa den Krümmungen der jeweils zugeordneten Begrenzungswände 48, 49 bzw. der Öffnung 44 entspricht.

An der der Öffnung 44 zugewandten Seite des Kolbens 37 ist ein Brühsieb 52 befestigt, das die gesamte Querschnittsfläche der Brühkammer 9 ausfüllt und die obere Oberfläche des Kolbens 37 bildet. Unterhalb des Brühsiebes 52 ist im Kolben 37 ein Sammelraum 53 für Kaffeegetränk angeordnet, der über nicht dargestellte Öffnungen mit der dem Brühsieb 52 abgewandten, unteren Seite des Kolbens 37 und somit mit der eine untere Stirnwand 9b der Brühkammer durchragenden Kaffeeleitung 19 verbunden.

Wie die herausvergrößerte Detaildarstellung der Figur 4 zeigt, sind mit dem Brühsieb 52 Schweißbolzen 54 verschweißt, die durch Ausnehmungen im Kolben 37 ragen und mittels Sicherungsfedern 55 dort befestigt sind. Um den gesamten Umfang des Brühsiebes 52 erstreckt sich eine Lippendichtung 56, die als geschlossener Ring aus einem flexiblen Dichtungsmaterial ausgebildet und in einem schräg nach oben außen verlaufenden Schlitz im Kolben 37 derart angeordnet ist, daß sie den Zwischenraum zwischen dem Umfang des Brühsiebes 52 und der Umfangswandung 9a vollständig ausfüllt und mit der der Brühkammer 9 zugewandten Oberfläche des Brühsiebes 52 fluchtend abschließt.

Die Funktion der Kaffeemaschine 1 wird nachfolgend anhand der Figuren 5 bis 11 näher erläutert. In Figur 5 steht der Schlitten 8 in einer Grundstellung G. In diese Grundstellung G wird der Schlitten 8 nach Beendigung jedes Brühvorganges und nach dem Ausstoßen des ausgelaugten Kaffeesatzes in Form eines zusammenhängenden Kaffeesatzkuchens 57 verfahren. Der Kaffeesatzkuchen 57 fällt in ein darunter stehendes Auffanggefäß 58 und kann somit entfernt werden. In der Stellung G ist der Schlitten 8 gegenüber der Brühkammer 9 etwas nach rechts versetzt, so daß sich zwischen der Umfangswandung 9a und der zweiten Begrenzungswand 49 am Schlitten 8 ein Spalt auftut, durch den das Innere der Brühkammer 9 belüftet werden kann. In dieser Stellung G verbleibt der Schlitten 8 bis zum Beginn eines neuen Brühvorganges, wobei eventuell an der ersten Begrenzungswand 48 hängengebliebene Kaffeesatzpartikel trocknen und in den Auffangbehälter fallen können. Figur 6 zeigt die der Grundstellung G entsprechende Getriebestellung, wobei der Mitnehmerstift 30 in seiner obersten Stellung im Langloch 31 steht. Dadurch steht auch die Führungsplatte 33 mit dem Träger 13 in ihrer obersten Stellung, in der das Brühsieb 52 bündig mit der Gleitplatte 43 abschließt. Der Mitnehmerstift 26 steht in einem Bereich der Nut 25, der einen geringen Abstand zur Drehachse 24a der Scheibe 24 aufweist. Der Mitnehmerstift 40 befindet sich am der Drehachse 38a der zweiten Schwinge 38 anliegenden Bereich des Langloches 39, während sich der Mitnehmerstift 10 im in Figur 6 rechten Drittel des Langlochs 41 befindet.

Wird nun über die Steuereinrichtung 22 ein neuer Brühvorgang eingeleitet, so wird die Scheibe 24 vom Motor in Richtung des Pfeiles B so weit gedreht, bis das Getriebe die in Figur 8 gezeichnete Stellung einnimmt. Bei dieser Getriebestellung befindet sich der Mitnehmerstift 30 in seiner unteren Endlage im Langloch 31, während sich der Mitnehmerstift 26 in der Nut 25 von der Drehachse 24a entfernt hat. Der Mitnehmerstift 10 hat sich in seine rechte Endlage im Langloch 41 bewegt. Damit wurde der Schlitten 8 in Richtung des Pfeiles A1 nach rechts in die in Figur 7 dargestellte erste Betriebsstellung I verfahren. In dieser ersten Betriebsstellung I gibt der Schlitten 8 die Öffnung 44 zum Eindosieren von frischem Kaffeemehl frei, während der Kolben 37 in Richtung auf die untere Stirnwand 9b der Brühkammer zurückgezogen ist. Die als Leiteinrichtung für das Kaffeemehl fungierende, zweite Begrenzungswand 49 befindet sich außerhalb des mittleren Bereiches der Öffnung 44, kann jedoch von der Umfangswandung 9a etwas nach innen versetzt stehen, um ein Verschmutzen der oberen Bereiche der Umfangswandung 9a durch einzufüllendes Kaffeemehl zu vermeiden.

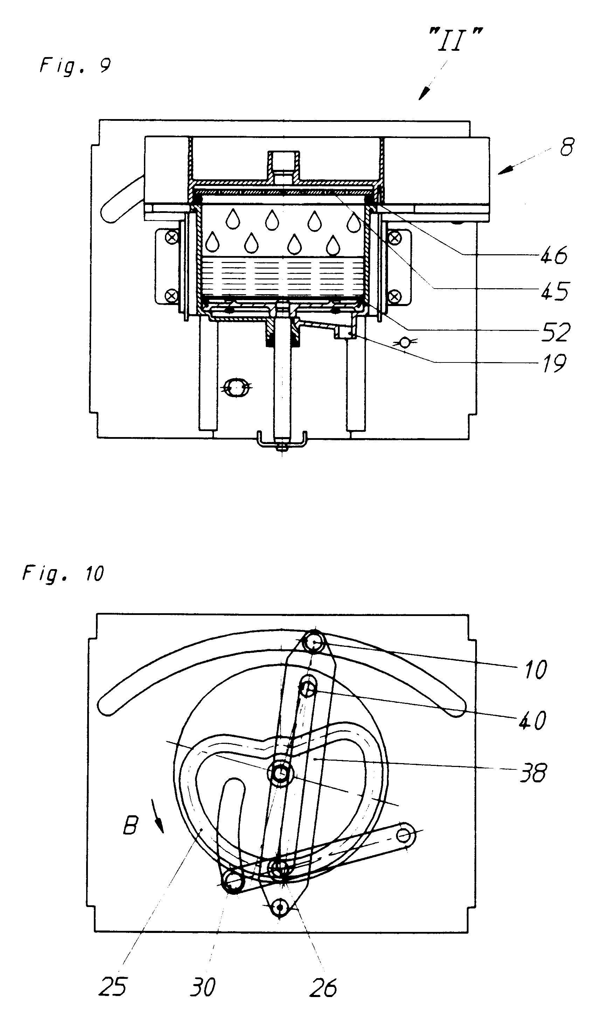

Bei einer weiteren Drehung der Scheibe 24 in Richtung des Pfeiles B wird der Mitnehmerstift 40 nach links bis in die in Figur 10 gezeichnete Stellung bewegt, so daß sich auch die Schwinge 38 mit dem Mitnehmerstift 10 und somit der Schlitten 8 nach links bewegen, bis dieser in einer zweiten Betriebsstellung II die Öffnung 44 der Brühkammer 9 verschließt. Dabei wird der Umfang der Öffnung 44 durch die Dichtung 46 nach außen abgedichtet, während sich das Verteilsieb 45 senkrecht über der Öffnung 44 befindet. Während der Bewegung des Schlittens 8 aus der Stellung I in die Stellung II läuft der Mitnehmerstift 26 durch einen koaxial zur Drehachse 24a verlaufenden Bereich der Nut 25, so daß sein Abstand von der Drehachse 24a konstant bleibt und der Mitnehmerstift 30 (und somit der Kolben 37) in seiner unteren, zurückgezogenen Stellung verharrt. In der Stellung II des Schlittens 8 findet der Brühvorgang statt, d. h. es wird heißes Wasser herangeführt und gelangt über das Verteilsieb 45 gleichmäßig verteilt in die Brühkammer 9, durchsetzt das auf dem Brühsieb 52 abgelagerte Kaffeemehl und tritt durch die Kaffeeleitung 19 aus. Nach Beendigung des Brühvorganges kann der restliche Kaffee durch einen kurzen Dampfstoß durch das Kaffeemehl und aus der Kaffeeleitung 19 gedrückt werden, wobei gleichzeitig der nunmehr ausgelaugte Kaffeesatz getrocknet wird.

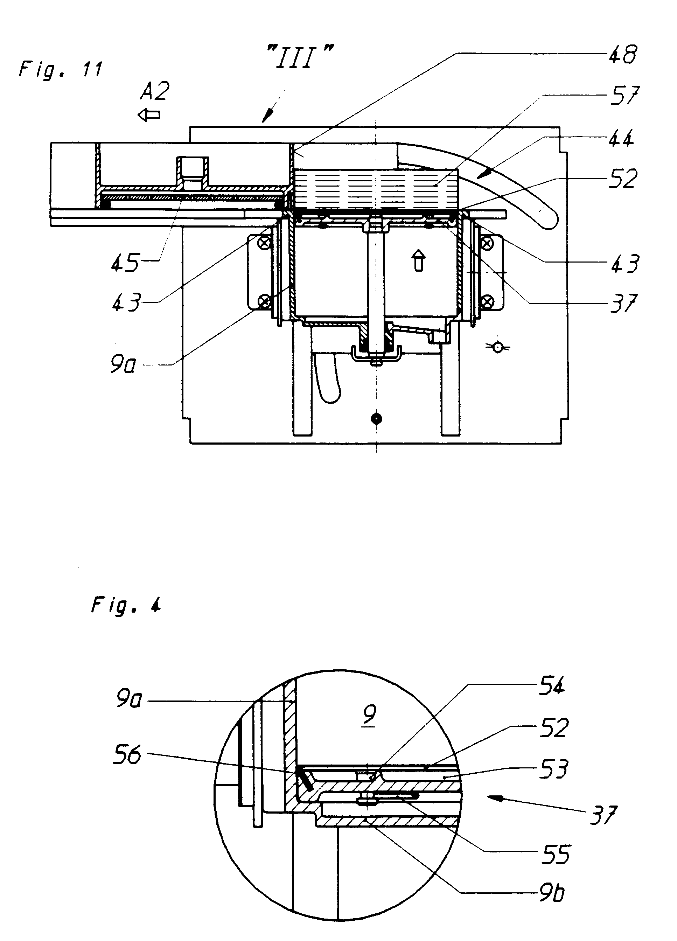

Nach Beendigung des Brühvorganges wird die Scheibe 24 wiederum in Richtung des Pfeiles B bewegt, wobei sich der Schlitten durch die beschriebenen Mechanismen in Richtung des Pfeiles A2 in seine in Figur 11 gezeichnete, dritte Betriebsstellung III bewegt. Gleichtzeitig bewegt sich der Mitnehmerstift 26 in der Nut 25 wieder in Richtung auf die Drehachse 24a und hebt den Kolben 37 an. In der Stellung III ist der Schlitten so weit von der Öffnung 44 zurückgezogen, daß die als Abstreifer wirkende, erste Begrenzungswand 48 mit der Umfangswandung 9a der Brühkammer 9 fluchtet. Bei der Bewegung in Richtung des Pfeiles A2 kann durch die Oberkante der Gleitplatte 43 eventuell am Verteilsieb haftendes Kaffeemehl in die Brühkammer zurückgestreift werden. Befindet sich der Schlitten 8 in seiner Stellung III, so kann der Kolben 37 mit dem daraufliegenden Kaffeesatzkuchen 57 so weit nach oben verschoben werden, daß die Oberfläche des Brühsiebes 52 mit der Oberfläche der Gleitplatte 43 fluchtet. Wird jetzt durch weiteres Drehen der Scheibe 24 in Richtung des Pfeiles B der Schlitten 8 aus der Stellung III in die Grundstellung G verfahren, so schiebt die in der Bewegung vorlaufende, als Abstreifer ausgebildete, erste Begrenzungswand 48 den Kaffeesatz in Form des kompletten Kaffeesatzkuchens 57 vor sich her, bis er an der der Stellung III gegenüberliegenden Seite der Brühkammer 9 in den Aufnahmebehälter 58 fällt. Ist der Schlitten 8 in der Grundstellung G angekommen, so wird durch die Scheibe 24 ein Endschalter 59 (Figur 2) betätigt, der den Motor 11 so lange abschaltet, bis von der Steuereinrichtung 22 ein neuer Brühvorgang eingeleitet wird.

Durch den beschriebenen, konstruktiv einfachen Aufbau der Brüheinrichtung 7 ist es möglich, sehr viele ihrer Teile, z. B. den Kolben 37, die Scheibe oder den Schlitten 8, aus Kunststoff zu fertigen.

In Abwandlung des beschriebenen und gezeichneten Ausführungsbeispiels kann die Relativbewegung zwischen der Brühkammer 9 und dem Schließglied 8 in kinematischer Umkehrung erfolgen, wobei das Schließglied 8 feststeht und die Brühkammer bewegt. Auch eine bogenförmige Relativbewegung zwischen beiden Teilen ist möglich. Es ist weiterhin möglich, statt der Begrenzungswand 48 einen gesonderten Abstreifer zu verwenden und diesen mit der Bewegung des Schlittens 8 zu koppeln. Auch das Getriebe kann im Rahmen der vorgegebenen Parameter verändert werden.

## Patentansprüche

1. Kaffeemaschine (1) mit einer Brüheinrichtung (7), die eine von einer Umfangswandung (9a) begrenzte Brühkammer (9) enthält, in der ein hin- und herbewegbarer Kolben (37) angeordnet ist und deren eine Stirnseite eine Öffnung (44) aufweist, mit einem über ein Getriebe (23) parallel zur Ebene der Öffnung (44) und relativ zur Brühkammer (9) zwischen zwei Stellungen bewegbaren Schließglied (8), das in einer der Stellungen die Öffnung (44) zum Eindosieren von Kaffeemehl freigibt und in der anderen Stellung verschließt, und mit einem sich zusammen mit dem Schließglied (8) über die Öffnung (44) bewegenden Abstreifer (48) zum Auswerfen des ausgelaugten Kaffeesatzes bei hochgefahrenem Kolben (37), **dadurch gekennzeichnet**, daß das Schließglied (8) zwischen einer ersten Stellung (I) zum Eindosieren von Kaffeemehl, einer zweiten Stellung (II) zum Verschließen der Öffnung (44) und einer dritten Stellung (III) zum nachfolgenden Abstreifen und Auswerfen des ausgelaugten Kaffeesatzes bewegbar ist, wobei sich das Schließglied (8) in seiner ersten Stellung (I) auf einer Seite der Öffnung (44) und in seiner dritten Stellung (III) auf einer im wesentlichen gegenüberliegenden Seite der Öffnung (44) der Brühkammer (9) befindet, und wobei der Abstreifer (48) derart angeordnet ist, daß er sich in der ersten Stellung (I) an einer der Öffnung (44) abgewandten Seite des Schließgliedes (8), in der dritten Stellung (III) außerhalb der Öffnung (44) und während einer Bewegung aus der dritten über die zweite Stellung (III, II) zum Abstreifen des Kaffeesatzes an der vorlaufenden Seite des Schließgliedes (8) befindet.

2. Kaffeemaschine nach Anspruch 1, **dadurch gekennzeichnet**, daß das Schließglied (8) zwischen zwei Brühvorgängen in eine Grundstellung (G) verfahrbar ist, in der sich der Abstreifer (48) oberhalb eines Auffanggefäßes (58) für ausgelaugten Kaffeesatz befindet.

3. Kaffeemaschine nach Anspruch 1 oder 2, **dadurch gekennzeichnet**, daß das Schließglied (8) entlang einer Geraden verschiebbar ist, und sich in seiner ersten und dritten Stellung (I, III) auf gegenüberliegenden Seiten der Öffnung (4) befindet.

4. Kaffeemaschine nach einem der Ansprüche 1 bis 3, **dadurch gekennzeichnet**, daß der Abstreifer (48) an einer Seite des Schließgliedes (8) befestigt ist.

5. Kaffeemaschine nach einem der Ansprüche 1 bis 4, **dadurch gekennzeichnet**, daß an einer dem Abstreifer gegenüberliegenden Seite des Schließgliedes (8) eine Leiteinrichtung (49) für einzudosierendes Kaffeemehl angeordnet ist.

6. Kaffeemaschine nach einem der Ansprüche 1 bis 5, **dadurch gekennzeichnet**, daß der Abstreifer (48) eine an die Form des Umfangs der Öffnung (44) der Brühkammer (9) angepaßte Form aufweist.

7. Kaffeemaschine nach einem der Ansprüche 1 bis 6, **dadurch gekennzeichnet**, daß rund um eine der Brühkammer (9) zugewandte Oberfläche (Brühsieb 52) des Kolbens (37) eine den Kolben (37) gegen die Umfangswandung (9a) abdichtende Dichtung (56) vorgesehen ist, die bündig mit der Oberfläche des Kolbens (37) abschließt.

8. Kaffeemaschine nach Anspruch 7, **dadurch gekennzeichnet**, daß die Dichtung eine schräg nach außen und in Richtung der Brühkammer (9) geneigt verlaufende Lippendichtung (56) ist.

9. Kaffeemaschine nach einem der Ansprüche 1 bis 8, **dadurch gekennzeichnet**, daß das Getriebe (23) eine die Bewegungen des Kolbens (37) und des Schließgliedes (8) relativ zur Brühkammer (9) steuernde, um eine Drehachse (24a) drehbar angetriebene Scheibe (24) sowie eine erste und eine zweite, pendelnd bewegbare Schwinge (27a, 27b, 38) enthält, wobei die erste Schwinge (27a, 27b) mit einem Mitnehmerstift (26) versehen ist, der in eine endlose Nut (25) in der Scheibe (24) eingreift, und die zweite Schwinge (38) eine Gleitführung (Langloch 39) für einen außerhalb der Drehachse (24a) an der Scheibe (24) befestigten Mitnehmerstift (40) aufweist.

10. Kaffeemaschine nach Anspruch 9, **dadurch gekennzeichnet,** daß die erste Schwinge (27a, 27b) mit dem Kolben (37) und die zweite Schwinge (38) mit dem Schließglied (8) in Antriebsverbindung steht.

11. Kaffeemaschine nach Anspruch 9 oder 10, **dadurch gekennzeichnet,** daß die erste Schwinge (27a, 27b) mit einer linear bewegbaren Führungsplatte (33) verbunden ist, die über einen fest mit ihr verbundenen Träger (13) mit dem Kolben (37) in Verbindung steht.

12. Kaffeemaschine nach einem der Ansprüche 9 bis 11, **dadurch gekennzeichnet**, daß die zweite Schwinge (38) mit einem Mitnehmerstift (10) versehen ist, der in eine Führung (42) am Schließglied (8) eingreift.

## Claims

1. Coffee percolator (1) with a brewing device (7) containing a brewing chamber (9) which is bounded by a peripheral wall (9a) and in which is arranged a reciprocatable piston (37) and of which one end face comprises an opening (44), with a closure member (8) which is movable by a mechanism (23) parallel to the plane of the opening (44) and relative to the brewing chamber (9) between two positions and which in one of the positions releases the opening (44) for adding ground coffee and in the other position closes it, and with a wiper (48) moving together with the closure member (8) across the opening (44) for ejecting the leached coffee grounds when the piston (37) is raised, characterised in that the closure member (8) is movable between a first position (I) for adding ground coffee, a second position (II) for closing the opening (44) and a third position (III) for subsequent wiping and ejection of the leached coffee grounds, wherein the closure member (8) is located on one side of the opening (44) of the brewing chamber (9) in its first position (I) and on an essentially opposite side of the opening (44) in its third position (III), and wherein the wiper (48) is arranged in such a way that it is located on one side off the closure member (8) facing away from the opening (44) in the first position (I), outside the opening (44) in the third position (III) and on the leading side of the closure member (8) during a movement from the third through the second position (III, II) for wiping off the coffee grounds.

2. Coffee percolator according to claim 1, characterised in that the closure member (8) is movable between two brewing operations into a normal position (G) in which the wiper (48) is located above the collecting vessel (58) for leached coffee grounds.

3. Coffee percolator according to claim 1 or 2, characterised in that the closure member (8) is slidable along a straight line, and located on opposite sides of the opening (4) in its first and third positions (I, III).

4. Coffee percolator according to any of claims 1 to 3, characterised in that the wiper (48) is attached to one side of the closure member (8).

5. Coffee percolator according to any of claims 1 to 4, characterised in that on one side of the closure member (8) opposite the wiper is arranged a guide device (49) for ground coffee to be added.

6. Coffee percolator according to any of claims 1 to 5, characterised in that the wiper (48) has a shape adapted to the shape of the circumference of the opening (44) of the brewing chamber (9).

7. Coffee percolator according to any of claims 1 to 6, characterised in that around a surface (brewing sieve 52) of the piston (37) facing towards the brewing chamber (9) is provided a seal (56) which seals off the piston (37) from the peripheral wall (9a) and which is flush with the surface of the piston (37).

8. Coffee percolator according to claim 7, characterised in that the seal is a lip seal (56) extending obliquely outwards and inclined in the direction of the brewing chamber (9).

9. Coffee percolator according to any of claims 1 to 8, characterised in that the mechanism (23) contains a disc (24) controlling the movements of the piston (37) and closure member (8) relative to the brewing chamber (9) and rotatably driven about an axis of rotation (24a) as well as first and second oscillatable rockers (27a, 27b, 38), wherein the first rocker (27a, 27b) is provided with a driver pin (26) which engages in an endless groove (25) in the disc (24), and the second rocker (38) comprises a slideway (slot 39) for a driver pin (40) attached to the disc (24) outside the axis of rotation (24a).

10. Coffee percolator according to claim 9, characterised in that the first rocker (27a, 27b) is connected in driving relationship to the piston (37), and the second rocker (38) to the closure member (8).

11. Coffee percolator according to claim 9 or 10, characterised in that the first rocker (27a, 27b) is connected to a linearly movable guide plate (33) which is connected, by a beam (13) rigidly connected to it, to the piston (37).

12. Coffee percolator according to any of claims 9 to 11, characterised in that the second rocker (38) is provided with a driver pin (10) which engages in a guide (42) on the closure member (8).

## Revendications

1. Machine à café (1) comportant un dispositif d'ébullition (7) qui contient une chambre d'ébullition (9) délimitée par une paroi périphérique (9a), dans laquelle est disposé un piston (37) ayant un mouvement pendulaire et dont une face frontale présente une ouverture (44), comportant un élément de fermeture (8) mobile entre deux positions par l'intermédiaire d'un engrenage (23), parallèlement au plan de l'ouverture (44) et relativement à la chambre d'ébullition (9), qui dégage dans une des positions l'ouverture (44) pour le dosage de la mouture de café et l'obture dans l'autre position, et comportant un racleur se déplaçant solidairement avec l'élément de fermeture (8) sur l'ouverture (44) pour éjecter le marc de café passé lorsque le piston (37) est en position haute, caractérisée en ce que l'élément de fermeture (8) est mobile entre une première position (I) pour doser la mouture de café, une deuxième position (II) pour obturer l'ouverture (44) et une troisième position (III) pour ensuite racler et éjecter le marc de café passé, l'élément de fermeture (8) se trouvant dans sa première position (I) sur un côté de l'ouverture (44) et dans sa troisième position (III) sur un côté sensiblement opposé de l'ouverture (44) de la chambre d'ébullition (9), et le racleur (48) étant disposé de telle manière qu'il se trouve, à la première position (i) sur un côté de l'élément de fermeture (8) éloigné de l'ouverture (44), sur la troisième position (III) à l'extérieur de l'ouverture (44) et lors d'un mouvement de la troisième à la deuxième position (III, II) pour le raclage du marc de café, sur le côté avançant de l'élément de fermeture (8).

2. Machine à café suivant la revendication 1, caractérisée en ce que l'élément de fermeture (8) est déplaçable entre deux opérations d'ébullition à une position initiale (G) dans laquelle le racleur (48) se trouve au-dessus d'un collecteur (58) pour le marc de café passé.

3. Machine à café suivant les revendications 1 ou 2, caractérisée en ce que l'élément de fermeture (8) est décalable le long d'une droite, et se trouve dans ses première et troisième positions (I, III) sur des côtés opposés de l'ouverture (4).

4. Machine à café suivant l'une des revendications 1 à 3, caractérisée en ce que le racleur (48) est fixé à un côté de l'élément de fermeture (8).

5. Machine à café suivant l'une des revendications 1 à 4, caractérisée en ce qu'un dispositif de guidage (49) pour la mouture de café à doser est disposé à un côté de l'élément de fermeture (8) opposé au racleur.

6. Machine à café suivant l'une des revendications 1 à 5, caractérisée en ce que le racleur (48) présente une forme adaptée à la forme du pourtour de l'ouverture (44) de la chambre d'ébullition (9).

7. Machine à café suivant l'une des revendications 1 à 6, caractérisée en ce qu'autour d'une surface (filtre du mélange 52) du piston (37) orientée vers la chambre d'ébullition (9) est prévu un joint (56) d'étanchéité du piston (37) contre la paroi périphérique (9a), ledit joint étant assemblé par raccord à la surface du piston (37).

8. Machine à café suivant la revendication 7, caractérisée en ce que le joint est un joint à lèvre (56) avançant en oblique vers l'extérieur et incliné en direction de la chambre d'ébullition (9).

9. Machine à café suivant l'une des revendications 1 à 8, caractérisée en ce que l'engrenage (23) contient un disque (24) actionné en rotation autour d'un axe de rotation (24a), commandant les mouvements du piston (37) et de l'élément de fermeture (8) par rapport à la chambre d'ébullition (9), ainsi qu'une première et une deuxième bielles oscillantes à mouvement pendulaire (27a, 27b, 38), la première bielle oscillante (27a, 27b) étant munie d'une broche d'entraînement (26) qui engrène dans une rainure sans fin (25) du disque (24), et la deuxième bielle oscillante (38) présentant un guidage à glissement (trou oblong 39) pour une broche d'entraînement (40) fixé à l'extérieur de l'axe de rotation (24a) sur le disque (24).

10. Machine à café suivant la revendication 9, caractérisée en ce que la première bielle oscillante (27a, 27b) est en relation d'entraînement avec le piston (37), et la deuxième bielle oscillante (38) avec l'élément de fermeture (8).

11. Machine à café suivant les revendications 9 ou 10, caractérisée en ce que la première bielle oscillante (27a, 27b) est reliée à une plaque de guidage (33) mobile linéairement, qui communique avec le piston (37) par l'intermédiaire d'un support (13) relié avec elle de façon fixe.

12. Machine à café suivant l'une des revendications 9 à 11, caractérisée en ce que la deuxième bielle oscillante (38) est munie d'une broche d'entraînement (10) qui engrène dans une glissière (42) dans l'élément de fermeture (8).
